Europäisches Patentamt

European Patent Office

Office européen des brevets

(11) Publication number: 0 261 737
A2

# EUROPEAN PATENT APPLICATION

(21) Application number: 87201805.6

(51) Int. Cl.⁴: G01K 1/10

(22) Date of filing: 21.09.87

(30) Priority: 22.09.86 BE 2061056

(43) Date of publication of application:
30.03.88 Bulletin 88/13

(84) Designated Contracting States:
AT CH DE FR IT LI LU NL SE

(71) Applicant: ELECTRO-NITE INTERNATIONAL
N.V.
Amerikalei 110
B-2000 Antwerpen(BE)

(72) Inventor: Cure, Omer Paul
Havenlaan 8
B-3610 Diepenbeek(BE)

(74) Representative: Debrabandere, René et al
Vereenigde Octrooibureaux Belgie N.V.
Charlottalei 48
B-2018 Antwerpen(BE)

(54) Probe for measuring in molten metal.

(57) The housing (2) ,for the measuring element (1) which is mounted in a small tube (4) from ceramics, comprises at the lower end an inner tube (7) from refractory material, an outer tube (8) comprised of two parts from steel, an intermediate tube (11) from ceramics around the inner tube (7) and a filling (9) from resin-bonded sand between the inner tube (7) and the outer tube (8). At the upper end, the housing (2) comprises two top tubes (16 and 17) from aluminium, one surrounding the other. The outer tube (8) is surrounded by a float (12,13) comprising a disc-shaped portion (12) and a projection (13). The electric conductors (3) extend outside the housing (2) through a flexible hose (23) connecting to a source of pressurized air (26).

Fig. 2

EP 0 261 737 A2

## "Probe for measuring in molten metal".

The invention relates to a probe for measuring in molten metal, which probe comprises a measuring element, a housing for said measuring element and electric conductors connecting to said measuring element, which extend outside the housing.

The probes used up to now of this kind, are suitable for a single dipping during some ten seconds at the most in molten metal, particularly molten steel. Each probe can thus only give an instant record of the temperature or the oxygen content of the molten metal for example.

Probes of this kind for temperature measuring, respectively oxygen measuring have been put on the market by the Applicant, and described respectively in French Patent n°2,382,683 and European Patent Application n° 0 108 431 of the Applicant.

In a number of situations, it is however desired to follow continuously the course of the temperature for example over an extended period of time. For instance in continuous-casting equipments, it is particularly important to be able to follow the temperature inside the tank the casting moulds are fed from.

The probe should consequently be suitable for withstanding for the duration of a metallurgic process, dipping inside the molten metal. Such processes generally take up from one to eight hours.

The above-mentioned known probes are thus not suitable therefor.

The invention has now for object to provide a probe for measuring inside molten metal, which can be dipped for a relatively long time in the molten metal and which is thus suitable for measuring continuously during the duration of a metallurgic process, and which is moreover relatively cheap.

For this purpose, the housing for the measuring element comprises an inner tube from refractory material, wherein the measuring element is mounted, an outer tube which surrounds the inner tube at least over that probe portion which is to be dipped in the molten metal, and a filling of refractory material between the outer tube and the inner tube.

The filling of refractory material forms a heat buffer which prevents strong temperature variations of the measuring element when dipping the probe in the molten metal or removing same therefrom, and which further excludes large temperature differentials between the measuring element portion lying inside the molten metal, and the portion thereof lying above said molten metal. Such temperature changes or such large temperature differentials can cause damage in the measuring element.

In a particular embodiment of the invention, the probe comprises a float which surrounds the outer tube.

Due to the float floating on the molten metal or more specifically on the slag which is formed on top of the molten metal, the probe will remain immersed always to the same depth during the measuring, in the molten metal. Temperature variations in the probe due to a continually changing immersion depth during the measuring are prevented with this embodiment. The float moreover forms an additional protection for the probe remainder in the location of the generally quite corrosive slag.

The float may be formed directly on the outer tube, but the float is preferably manufactured as a loose part and is secured by a fastener to the outer tube.

Not only is this embodiment simple and cheap, but it further allows to package and convey separately the float and the probe remainder, which means a gain in space during conveyance and reduces the breakage danger during such conveyance.

In a remarkable embodiment of the invention, the filling between inner tube and outer tube, is a bonded refractory powder.

Said filling is preferably a resin-bonded sand.

In an advantadgeous embodiment of the invention, the inner tube is made from ceramics.

The inner tube is perferably from aluminum oxide.

Such aluminum oxide tubes are available in the trade and relatively unexpensive. Said tubes are however highly sensitive to heat shocks. Due to the above-described structure of the probe according to the invention, such relatively unexpensive tubes can still be used as encasement for the measuring element.

In a preferably-applied embodiment of the invention, the housing comprises an intermediate tube which surrounds locally the inner tube inside the outer tube and forms an additional protection for the measuring element and the inner tube level with that location where lies the slag formed on the molten metal.

In another advantageous embodiment of the invention, the outer tube is made from metal.

The outer tube is preferably from steel.

In another particular embodiment of the invention, the housing comprises on that end away from the dipping end, which is to lie above the molten metal during the measuring, two top tubes surrounding one another, which surround the corresponding end of the measuring elements and of the electric conductors connecting thereto.

In another remarkable embodiment of the invention, the electric conductors extend out of the housing through a flexible hose.

The flexible hose is preferably connected to a pressurized-air source, it opens up inside the housing and the housing is provided on that end away from the dipped end, with at least one opening for letting the pressurized air escape.

In this embodiment, the uppermost housing portion and mostly the electric conductors are cooled with pressurized air.

Other features and advantages of the invention will stand out from the following description of a probe for measuring in molten metal, according to the invention. This description is only given by way of example and does not limit the invention; the reference numerals pertain to the accompanying drawings.

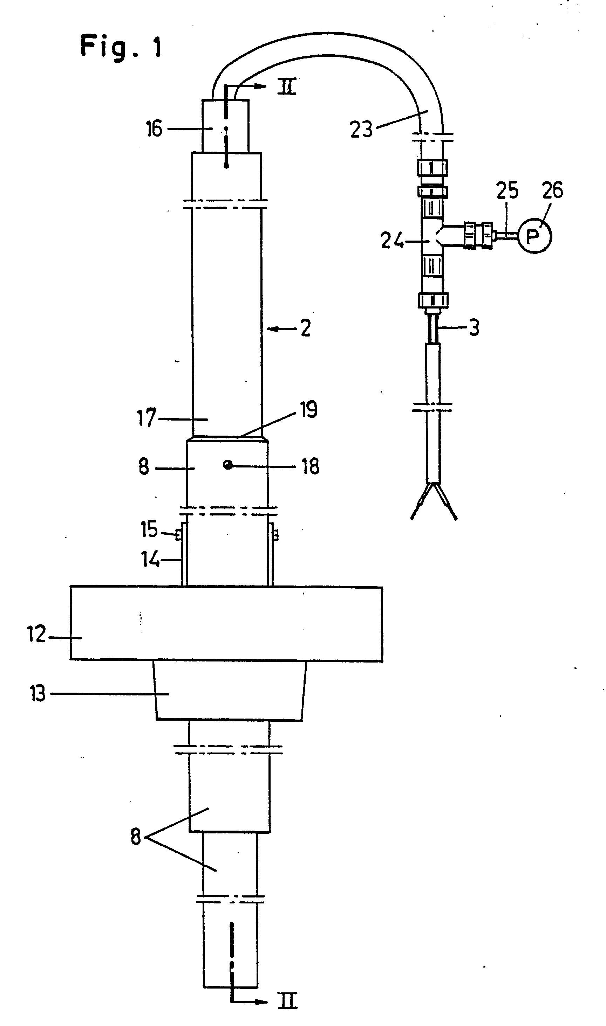

Figure 1 is a diagrammatic side view of a probe for measuring in molten metal according to the invention.

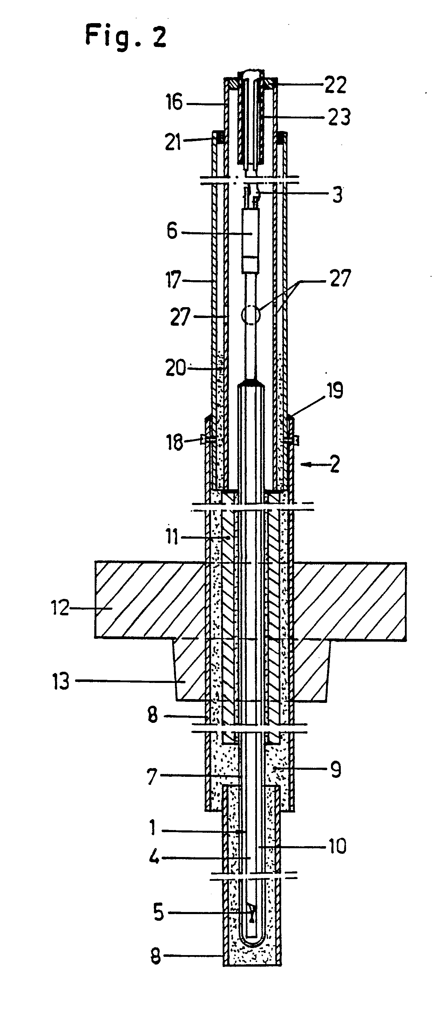

Figure 2 shows a cross-section along line II-II in figure 1.

In both figures, the same reference numerals pertain to the same elements.

The probe according to the figures is intended to be partly dipped into a molten metal bath the top surface of which is formed by a slag. The probe is dipped in a substantially vertical position with that end lying at the bottom in the figures, facing downwards. Said latter end is then also the dipping end. The ends of the probe or of components therefrom will then also be determined thereafter relative to said normal position when dipping and thus during the measuring, that is the position shown in the figures.

The probe according to the figures is mainly comprised of a measuring element 1, a housing 2 for said measuring element 1, and two electric conductors 3 which connect to the measuring element 1.

The measuring element 1 is a platinum-rhodium thermo-electric couple. The thin wires of said element extend through channels inside a small thin tube 4 from $Al_2O_3$. The hot junction 5 from said thermo-electric couple lies on the lowermost end outside the small tube 4. The cold junction lies at the top inside a small copper tube 6 which is mounted on the uppermost end of the small tube 4 and further forms a connector wherewith the thermo-electric couple wires are electrically connected with both copper conductors 3.

The housing 2 comprises an inner tube 7 from $Al_2O_3$ which is closed at the bottom and includes the small tube 4 with the thermo-electric couple 1, and an outer tube 8 from steel.

The space between the inner tube 7 and outer tube 8 is filled with a filling 9 from refractory material, namely a resin-impregnated sand, such as $SiO_2$, chromite sand or zirconium sand. The impregnated sand is subjected after being brought between tubes 7 and 8, to a heat processing, for example during 10 minutes at a temperature of 150°C. The sand adheres thereby into a solid shape.

The space between the innermost tube 7 and the small tube 4 is filled with a filling 10 from MgO powder.

While the filling 9 forms heat buffer around the thermo-electric couple 1, the filling 10 enhances the stability and thermal balance of said thermo-electric couple.

Inside the outer tube 8, the inner tube 7 is surrounded over part of the height thereof by an intermediate tube 11 which is imbedded in said filling 9. Said intermediate tube 11 is also made from $Al_2O_3$ and insures additional protection for the measuring element 1, notably level with the slag over the molten metal.

To retain the response time of the thermo-electric couple 1 as short as possible, the lowermost end of said thermo-electric couple is naturally not surrounded by the intermediate tube 11.

The outer tube 8 can have the same diameter over the whole length thereof. Said tube does however preferably have at the bottom, as shown in the figures, where no intermediate tube 11 is present, a smaller diameter because the response time of the thermo-electric couple 1 should be as short as possible. The outer tube 8 may then as shown, be comprised of two discrete tube parts with different diameter, whereby the lowermost tube part with smaller diameter is imbedded with the uppermost end thereof into the filling 9 lying between the uppermost portion of outer tube 8 and the inner tube 7.

A characteristic of the invention is also that the outer tube 8 is surrounded by a float 12, 13 from refractory cement. Said float is comprised of a disc-shaped portion 12 and a round extension 13 connecting thereto on the lower side.

By means of the float 12, 13, the complete probe unit can float on the molten metal, whereby thus the float 12, 13 lies level with the top surface of the molten metal and thus level with the slag. The disc-shaped portion insures enough stability while the extension 13 is responsible for additional protection of the probe remainder in the location of the slag. Due to portion 13 having a smaller diameter, material is being saved and the float weight is reduced.

The float 12, 13 can be secured directly on the outer tube 7, for example around a plate welded to said outer tube 7.

The float 12, 13 is however preferably manufactured as in the embodiment shown in the figures, as a discrete part relative to the probe remainder. This does not only make the manufacture easier, but also the float 12,13 can be packaged and conveyed separately, which means place saving and reducing the danger of damaging the float.

The float 12, 13 is secured to the outer tube 7 directly before putting the probe into use.In the disc-shaped portion 12 of float 12, 13 there are machined therefor L-shaped hooks 14 which project with one leg thereof on the top side, out of the disc-shaped portion. Said projecting legs are fastened by means of small screws 15 to the inner side of outer tube 8.

The above-described housing portion, and thus notably the inner tube 7 and outer tube 8 extend from inside the molten metal up to above same when the probe floats therein, but not up to above the small tube 4 with the thermo-electric couple 1.

The uppermost portion of said small tube 4 and thus also the uppermost portion of the thermo-electric couple 1 inclusive the small copper tube 6, are surrounded by two top tubes 16 and 17 surrounding one another, from aluminum.

The lowermost end of the outermost top tube 17 fits into the open uppermost end of outer tube 8 and extends down to the level of the uppermost end of intermediate tube 11.

Said outermost top tube 17 is fastened by means of small screws 18 to the outer tube 8 and the slit between the uppermost end of outer tube 8 and the outermost top tube 17 is sealed by a seal 19.

The innermost top tube 16 projects at the top outside the outermost top tube 17 and extends at the bottom down to the uppermost end of intermediate tube 11.

At the bottom, the space between top tubes 16 and 17 is filled with a filling 20 from refractory powder, while at the top, said top tubes 16 and 17 are retained spaced from one another by spacers 21, without however the ring-shaped opening between the uppermost end of the outermost top tube 17 and innermost top tube 16 being completely closed.

The uppermost end of the innermost top tube 16 is sealed with a seal 22. Through said seal 22 there extends however a flexible hose 23 wherethrough run both conductors 3. The flexible hose 23 is a synthetic material tube surrounded by a small woven glass-fiber tube.Said flexible hose 23 connects at a distance from housing 2, to the one arm of a T-shaped part 24. A second arm of T-shaped part 24 connects through a tube 25 to a pressurized-air pump 26. Both conductors 3 which run through flexible hose 23, further run through the third arm of T-shaped part 24, which arm is sealed at the end thereof about said conductors 3.

By means of pump 26, air is thus pumped through tube 23, about conductors 3. Said pressurized air enters through the open end of tube 23 in the innermost top tube 16 and cools there the uppermost end of the thermo-electric couple 1 and the small copper tube 6 with the cold junction. Said pressurized air flows out of the innermost top tube 16 through openings 27 in the wall thereof, towards the ring-shaped space between both top tubes 16 and 17, above filling 20, and it flows to the outside through the open uppermost end of said ring-shaped space, between the spacers 21.

The above-described probe has a quite simple structure and is relatively unexpensive. The probe can use cheap materials such as aluminum oxide for a number of small tubes, without any danger that such aluminum oxide tubes will burst due to heat shocks.

The float insures an accurate and stable positioning of the probe and forms an additional protection for the probe remainder, mostly level with the slag. The disc-shaped portion also forms a kind of heat shield which limits the upwards radiation. The top tubes 16 and 17 reflect a major portion of the still-present heat radiation, whereby thus the uppermost portion of the thermo-electric couple and the conductors 3 are protected to the upmost. Such protection is further improved by the cooling with pressurized air.

The resulting probe can be used during many hours to perform measurings.

Said probe is thus operatingly reliable and relatively unexpensive.

The invention is in no way limited to the above-described embodiment and within the scope of the Patent Appliction, many changes may be brought to the described embodiment, notably as regards the shape, the composition, the arrangement and the number of the components which are being used to embody the invention.

Particularly the ceramics for the small tube wherein the thermo-electric couple lies, for the inner tube and for the outer tube should not necessarily be aluminum oxide.Other ceramics such as $ZrO_2$ may also be used.

The outer tube should not necessarily be manufactured from steel. It could also be made from another metal or ceramics.

Said outer tube should not necessarily, as already stated, be comprised of two discrete parts.

As with the above-described embodiment, the float forms a part discrete from the probe remainder, the probe remainder itself may possibly be used by itself, without float.

The measuring element does not either necessarily have to be a thermo-electric couple for measuring the temperature. It may also be an element for measuring an activity, for example the oxygen activity. The oxygen-activity measuring element can form a single unit with the inner tube and for example close off said inner tube at the dipped end.

## Claims

1. Probe for measuring in molten metal, which probe comprises a measuring element (1), a housing (2) for said measuring element (1) and electric conductors (3) connecting to said measuring element (1), which extend outside the housing (2), characterized in that the housing (2) for the measuring element (1) comprises an inner tube (7) from refractory material, wherein the measuring element (1) is mounted, an outer tube (8) which surrounds the inner tube (7) at least over that probe portion which is to be dipped in the molten metal, and a filling (9) of refractory material between the outer tube (8) and the inner tube (7).

2. Probe according to claim 1, characterized in that it comprises a float (12,13) which surrounds the outer tube (8).

3. Probe according to claim 2, characterized in that the float (12,13) is manufactured as a discrete part from the probe remainder and is fastened with fasteners (14,15) to the outer tube (8).

4. Probe according to either one of claims 2 and 3, characterized in that the float (12,13) comprises a disc-shaped portion (12) and, on that side where the probe dipping end lies, a projection (13) for additional protection of the probe remainder against the molten metal, particularly against the slag forming thereabove.

5. Probe according to any one of claims 1 to 4, characterized in that the filling (9) between the inner tube (7) and outer tube (8), is a bonded refractory powder.

6. Probe according to claim 5, characterized in that said filling (9) is a resin-bonded sand.

7. Probe according to claim 6, characterized in that the filling (9) is a resin-bonded sand from the group: silicium oxide, chromite sand and zirconium sand.

8. Probe according to any one of claims 1 to 7, characterized in that the inner tube (7) is closed on the dipped end.

9. Probe according to any one of claims 1 to 8, characterized in that the inner tube (7) is made from ceramics.

10. Probe according to claim 9, characterized in that the inner tube (7) is made from aluminum oxide.

11. Probe according to any one of claims 1 to 10, characterized in that said housing (2) comprises an intermediate tube (11) which surrounds locally the inner tube (7) inside the outer tube (8), and forms additional protection for the measuring element (1) and inner tube (7) level with that location where lies the slag formed on the molten metal.

12. Probe according to claim 11, characterized in that the intermediate tube (11) is made from ceramics.

13. Probe according to claim 12, characterized in that the intermediate tube (11) is made from aluminium oxide.

14. Probe according to any one of claims 11 to 13, characterized in that said outer tube (8) is comprised of two parts with different diameter, namely a first part about the intermediate tube (11) and a part with smaller diameter about the dipping end of the inner tube (7).

15. Probe according to claim 14, characterized in that the outer tube (8) is comprised of two discrete parts with different diameter, which are joined together by the filling (9) between the inner tube (7) and outer tube (8).

16. Probe according to any one of claims 1 to 15, characterized in that the outer tube (8) is made of metal.

17. Probe according to claim 16, characterized in that the outer tube (8) is made of steel.

18. Probe according to any one of claims 1 to 17, characterized in that the measuring element (1) is mounted in turn inside a small tube (4) from ceramics.

19. Probe according to claim 18, characterized in that the measuring element (1) is a thermo-electric couple the hot junction (5) of which is located on the dipping end outside the small tube (4), and the cold junction is located outside the other end of said small tube (4).

20. Probe according to claim 19, characterized in that the measuring element (1) comprises a small copper tube (6) wherein the cold junction lies, which small tube (6) further forms a connector wherewith the thermo-electric couple (1) proper is electrically connected to said conductors (3).

21. Probe according to any one of claims 18 to 20, characterized in that the space between the small tube (4) of the measuring element (1) and the inner tube (7) is filled with refractory material at least on the dipping end side.

22. Probe according to claim 21, characterized in that said refractory material is MgO.

23. Probe according to any one of claims 1 to 22, characterized in that the housing (2) comprises on that end away from the dipping end, to be located above the molten metal during the measuring, two metal top tubes surrounding one another (16 and 17), which surround the corresponding end of the measuring element (1) and of the electric conductors (3) connecting thereto.

24. Probe according to claim 23, characterized in that the top tubes (16 and 17) are made from aluminum.

25. Probe according to either one of claims 23 and 24, characterized in that the outermost top tube (17) enters with one end thereof the end of said outer tube (7) and is fastened to said outer tube.

26. Probe according to any one of claims 23 to 25, characterized in that the innermost top tube (16) connects with the one end thereof to that end removed from the dipping end, of the intermediate tube (11).

27. Probe according to any one of claims 23 to 26, characterized in that the space between both top tubes (16 and 17) is filled with refractory material at least on that side facing the dipped end.

28. Probe according to. any one of claims 1 to 27, characterized in that the electric conductors (3) extend outside the housing (2) through a flexible hose (23).

29. Probe according to claim 28, characterized in that the flexible hose (23) connects to a source of pressurized air (26) and opens inside the housing (2), and said housing (2) is provided on that end away from the dipping end, with at least one opening for letting the pressurized air escape.

30. Probe according to any one of claims 23 to 27 and claim 29, characterized in that the flexible hose (23) opens with the one end inside the space inside the innermost top tube (16), said innermost tube (16) being provided in the wall thereof with at least one opening (27) wherethrough the pressurized air enters the space between the innermost top tube (16) and outermost top tube (17), and said outermost top tube (17) is open on that end thereof removed from the dipping end, to let the pressurized air escape.

31. Probe according to either one of claims 29 and 30, characterized in that it comprises a T-shaped part (24) to one arm of which the flexible hose (23) connects, while another arm connects by means of a line (25) with the pressurized-air source (26), and the electric conductors (3) leave the T-shaped part by means of the third arm, through a seal.

32. Probe according to any one of claims 28 to 31, characterized in that the flexible hose is made from synthetic material surrounded by a small woven glass-fiber tube.

**Fig. 1**

Fig. 2

0 261 737